(19) Europäisches Patentamt
European Patent Office
Office européen des brevets

(11) **EP 3 026 612 A1**

(12) **EUROPEAN PATENT APPLICATION**

(43) Date of publication:
**01.06.2016 Bulletin 2016/22**

(51) Int Cl.:
*G06Q 10/06* [(2012.01)]    *G06Q 10/08* [(2012.01)]

(21) Application number: **15193125.0**

(22) Date of filing: **05.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority:  **28.11.2014   US 201414555721**

(71) Applicant: **Infineon Technologies AG
85579 Neubiberg (DE)**

(72) Inventors:
• OTT, Thomas
  **82166 Gräfelfing (DE)**
• SEITZ, Alexander
  **86153 Augsburg (DE)**

(74) Representative: **Viering, Jentschura & Partner mbB
Patent- und Rechtsanwälte
Am Brauhaus 8
01099 Dresden (DE)**

(54)    **SYSTEM AND METHODS FOR ORDER PROMISING USING ATP AGGREGATION**

(57)    Systems and methods relate to managing production data for supply chain and manufacturing processes in an available-to-promise (ATP) context. In fulfilling customer or ATP product requests, systems and methods can apply rules to consider flexibilities in the supply chain and manufacturing processes. The system and methods can determine aggregated quantities of ATP or potential quantities of ATP products that may be produced from the supply chain and manufacturing processes that exceed ordinary or normally designed output. The supply chain and manufacturing processes the aggregated quantities may be able to realize the aggregated ATP quantities output by adjusting the supply chain or manufacturing processes. Therefore, if requirements of a customer order cannot be met by the normally expected output of supply chain and manufacturing processes, the supply chain and manufacturing processes may be automatically adjusted to better meet or fulfill the customer order.

FIG. 1A

**15**

| | |
|---|---|
| Availability Time(s) 15a | Multiplication Factors 15g |
| Quantity    15b | Production Cycle Times 15h |
| Production Sequence 15c | Bill of Material Information 15i |
| Materials    15d | Flexibility Data 15j |
| Production Processes    15e | Aggregated ATP Data 15k |
| Resource Consumption Factors 15f | Misc. 15l |

FIG. 1B

## Description

Technical Field

Various embodiments relate to a systems and methods for managing available-to-promise products (ATP) and making promises to fulfill customer requests.

## Background

Customers request or demand a manufacturer to deliver a quantity of product by one or more dates. This date and quantity information may be referred to as the "manufacturer promise" or "promise information". Due to material, capacity and other limitations, a manufacturer may not be able to meet a particular customer request. To increase output, manufacturers can begin producing or manufacturing products, before any customer orders are received. Therefore supply chain and manufacturing facilities are designed to meet projected demand. The forecast or projections may be needed due to the high production cycle times and shorter order points of the customers. Forecasts may be based on many factors or input. A product manufactured from a supply chain and manufacturing processes based on a forecast can be referred to as "available to promise" or "ATP" product. In supply chain management, when a product is available to be promised to a customer, it is considered "available to promise" (ATP). ATP data for ATP products may consist of quantities of products with associated dates that the products are scheduled to be available for delivery to the customer.

However, forecasts used to design or setup supply chain and manufacturing processes are not likely to be 100% correct. Instead there likely will be a discrepancy between the forecast and the actual demand or orders recevied from customers. For example, in the semiconductor industry, forecast accuracy of semiconductor manufacturing may be about 70%.

Forecast error can be of three different types. (1) The total demand quantity (demand height) for a single time period and a product family for which the demand is forecasted, can be wrong. (2) the forecasted time period of the demand can be wrong. (3) the demand mix, meaning the forecasted shares of the demand of single products contained in one product family can be incorrect. For example, a forecast may predict 100 pieces total demand for a product family containing two ATP products in a specific time period. The forecast may be broken down to the ATP product level so as to plan production and generate a production plan. The total demand may be broken down to equal shares (e.g., 50 pieces for product 1 and 50 pieces for product two). This can be called the forecasted demand mix. Afterwards orders may be received and realized. In one example there may be a customers order for 60 pieces of product 1 and for only 40 pieces of product 2. This can be called the realized demand mix. In this exmaple, there is no foreceast error on the product family level. However, on demand mix level, there is an error of 40 %. Conventional approaches may promise 50 pieces of product 1 and 40 pieces of product two. Therefore supply chain and manufacturing processes may need to be changed or adjusted in an efficient manner in order to more accurately respond to actual demand.

In accordance with one or more exemplary embodiments, there is provided systems and methods for automatically managing available-to-promise (ATP) data and adjusting supply chain and manufacture processes to produce available to promise (ATP) products.

## Summary

In the accordance with exemplary embodiments, a method may include: obtaining, by the one or more computers, production data for the plurality of ATP products, the production data comprising data indicating one or more availability times and an associated finished output product quantity at each of the one or more availability times for each of the plurality of ATP products, wherein the availability times and associated quantity are based on projection data; generating, by the one or more computers, aggregated ATP data, the aggregated ATP data comprising data indicating for each of one or more time periods: one or more ATP product groups, each ATP product group comprising a plurality of ATP products, and a quantity associated with each of the ATP product groups, the quantity indicating a maximum amount of finished products that can be produced from a selected one of ATP products from the ATP product group; transmitting, by one or more computers, an indication to begin production according to the production data to one or more computers associated with manufacture of a plurality of Available-to-Promise (ATP) products; receiving, at the one or more computers, a customer order data indicating one or more products of the ATP products requested; generating, by the one or more computers, data indicating an order promise date respectively for each of the one or more products of the received customer order data, the order date based on the production data and the aggregated ATP data; transmitting, by the one or more computers, the data indicating the generated order promise date to one or more computers associated with the received customer order data; transmitting, by the one or more computers, to the one or more computers associated with production of the plurality of ATP products, data indicating a modification to production based on the received customer order data, and the production data or aggregated ATP data; and updating, by the one or more computer the aggregated ATP data based on the received customer order data.

In accordance with one or more exemplary embodiments, wherein the production data may include data indicating one or more production resources used for each ATP product, capacity information for each production resource, capacity consumption factors of each ATP product on each resource indicating the amount of capacity one unit of each ATP product consumes on each of the one machine or more machines, one or more production routes and a time associated with each of the production routes for each respective ATP product, intermediate and raw materials, one or more machines used for each of the ATP products, multiplication factors of each ATP product on each machine indicting an amount of successor products can be produced out of one intermediate product on a specific machine, one or more lead times of each ATP product on each machine indicating an amount of time each ATP product uses a machine take, a work in progress for each ATP product, and intermediate and raw materials.

In accordance with one or more exemplary embodiments, for each of the ATP product groups of the aggregated ATP data may include a plurality of ATP products that can be produced from a same material processed through a same sequence of one or more production routes.

In accordance with one or more exemplary embodiments, the customer order may further include data indicating a requested ATP product quantity and a requested deadline each of the one or more ATP products in the customer order.

In accordance with one or more exemplary embodiments, the order promise dates may be determined from the aggregated ATP data for a respective ATP product when the requested quantity and/or deadline exceeds the respective quantity or deadline capability indicated in the production data.

In accordance with one or more exemplary embodiments, each ATP product in which the order promise date may be determined from the aggregated ATP data belongs to an ATP product group that has a remaining production time less than a difference between a current date and the respective deadline of the customer order for an amount of finished products that is equal to or greater than the quantity in the customer order.

In accordance with one or more exemplary embodiments, the production route data may further include data indicating one or more fabrication processes.

In accordance with one or more exemplary embodiments, the data indicating one or more fabrication processes may include data indicating one or more stocking processes, one or more sorting processes, one or more assembly processes, and one or more testing processes. In accordance with one or more exemplary embodiments, the projection data may include data based at least one of a demand forecast model, a demand forecast from customers, and previous orders received from customers.

In accordance with one or more exemplary embodiments, a system may include : one or more electronic databases stored on one or more non-transitory computer-readable storage media, the databases comprising production data including information for a plurality of available-to-promise (ATP) products, comprising, for one each of the ATP products, at least availability time and output quantity for each availability time; an aggregation system that may include: one or more processors, a non-transitory computer-readable storage medium comprising instructions and operatively coupled to the one or more processors, the instructions which when executed by the one or more processors, may cause the processors to: retrieve, from the one or more databases, at least a portion of the production data; generating, by the one or more processors, aggregated ATP data, the aggregated ATP data comprising data indicating for each of one or more time periods: one or more ATP product groups, each ATP product group comprising a plurality of ATP products, and a quantity associated with each of the ATP product groups, the quantity indicating a maximum amount of finished products that can be produced from a selected one of ATP products from the ATP product group; and storing the aggregated ATP data in the one or more electronic databases.

In accordance with one or more exemplary embodiments, the system may further include an order promising system that may include: one or more processors, a non-transitory computer-readable storage medium comprising instructions and operatively coupled to the one or more processors, the instructions, when executed by the one or more processors, and may cause the processors to: accessing, by the one or more computers, the production data and the aggregated ATP data; receiving, at the one or more computers, a customer order data indicating one or more products of the ATP products requested; generating, by the one or more computers, data indicating at least one order promise date respectively for each of the one or more products of the received customer order data, the at least one order date based on the production data or the aggregated ATP data; and transmitting electronically, by the one or more processors, an order confirmation including the one or more order promise dates to one or more computers associated with the received customer order data.

In accordance with one or more exemplary embodiments, the instructions may further cause the processors to update the production data and the aggregated ATP data based on the received customer order data and the order confirmation.

In accordance with one or more exemplary embodiments, the instructions may further cause the one or more processors to electronically transmit data indicating a modification to supply chain based on the received customer order data to one or more computers controlling a supply chain of the ATP products.

## Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:

Fig. 1A shows a schematic representation of a system operatively connected to one or more devices or systems in accordance with an exemplary embodiment of the present disclosure;

Fig. 1B shows a schematic representation illustrating exemplary types of data stored in a database of a system in accordance with an exemplary embodiment of the present disclosure.

Fig. 2 shows a flow chart illustrating a method for managing ATP product data and managing supply chain and manufacturing processes according to an exemplary embodiment of the present disclosure.

Fig. 3A is a schematic flow diagram illustrating an exemplary supply chain and manufacturing processes according to an exemplary embodiment of the present disclosure.

Fig. 3B is a table illustrating the production sequences of the supply chain and manufacturing processes illustrated in Fig. 3A according to an exemplary embodiment of the present disclosure.

Fig. 4A is a table showing potential quantities of ATP products over time produced from the supply chain and manufacturing processes of Fig. 3A according to an exemplary embodiment of the present disclosure.

Fig. 4B is a table showing potential aggregated quantities of ATP products over time produced from a modified or adjusted the supply chain and manufacturing processes of Fig. 3A according to an exemplary embodiment of the present disclosure.

Fig. 5 shows a flow chart illustrating a method for managing received customer order requests and determining order promise dates for ATP products according to an exemplary embodiment of the present disclosure.

Fig. 6 is a flow diagram illustrating examples of handling customer orders according to an exemplary embodiment of the present disclosure.

Fig. 7 is a chart illustrating potential output quantities for an ATP product according to an exemplary embodiment of the present disclosure.

Figs. 8-9 are flow diagrams illustrating exemplary supply chains and manufacturing processes according to an exemplary embodiment of the present disclosure.

## Description

The following detailed description refers to the accompanying drawings that show, by way of illustration, specific details and embodiments in which the invention may be practised. These embodiments are described in sufficient detail to enable those skilled in the art to practice the invention. Other embodiments may be utilized and structural, logical, and electrical changes may be made without departing from the scope of the invention. The various embodiments are not necessarily mutually exclusive, as some embodiments can be combined with one or more other embodiments to form new embodiments. Various embodiments are described in connection with methods and various embodiments are described in connection with devices. However, it may be understood that embodiments described in connection with methods may similarly apply to the devices, and vice versa.

The word "exemplary" is used herein to mean "serving as an example, instance, or illustration". Any embodiment or design described herein as "exemplary" is not necessarily to be construed as preferred or advantageous over other embodiments or designs.

The terms "at least one" and "one or more" may be understood to include any integer number greater than or equal to one, i.e. one, two, three, four, etc.

The term "a plurality" may be understood to include any integer number greater than or equal to two, i.e. two, three, four, five, etc.

The term "connection" may include both an indirect "connection" and a direct "connection".

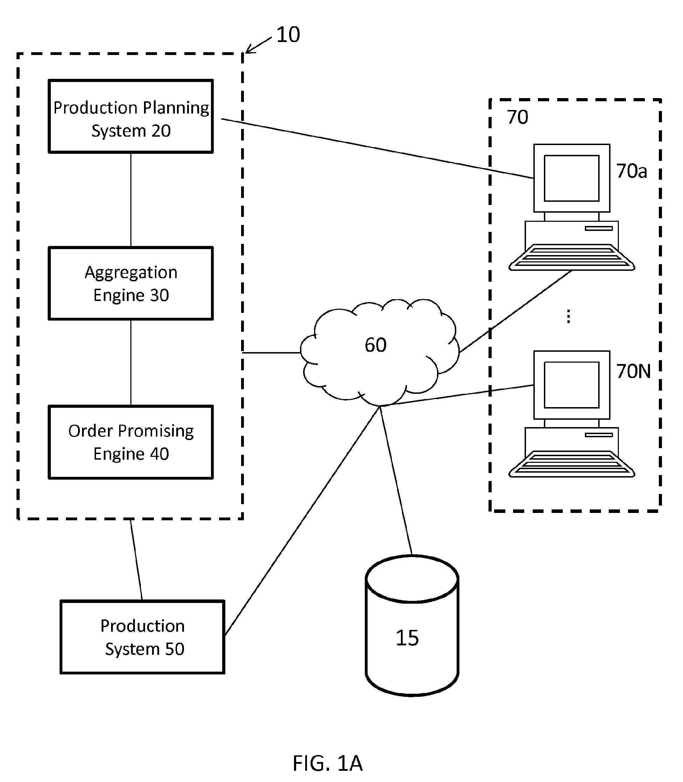

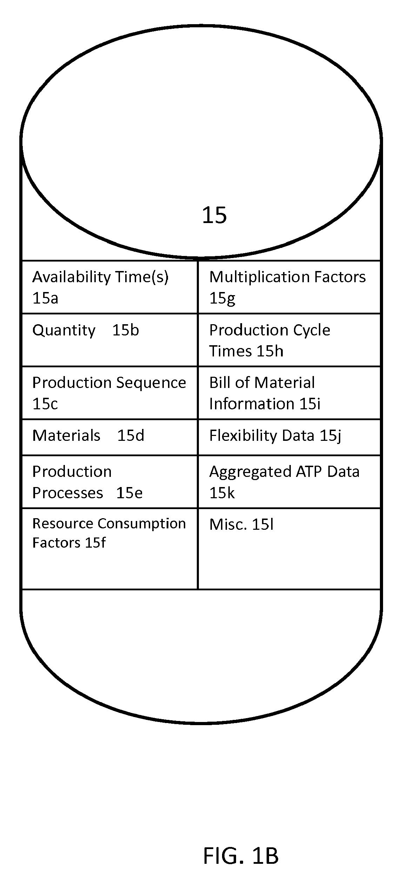

Fig. 1 shows according to exemplary embodiments, an environment including a system 10 for managing supply chain and manufacturing processes. The system 10 may include one or more subsystems, including, for example a production planning system 20. The production planning system 20 may generate or manage data indicating or reflects production processes for one or more products to be offered to customers according to an Available-to-Promise (ATP) scheme. In an ATP scheme or environment, when a product is available to be promised to a customer, it is considered "available to promise" (ATP).

The production planning system 20 may be used to plan the production of various products including, for example, semiconductor devices, in one example. The production planning system 20 may be used to generate and/or manage production data. Production data may indicate various product routes, locations, processes, materials, etc. used in manufacturing and producing ATP Products. For example, production route data may indicate the general or specific sequence of manufacturing processes, raw materials needed, and intermediate goods produced, in the manufacture of an ATP product. The production planning system 20 may generate and/or manage ATP data or ATP related data. The ATP data may at least indicate a quantity or total number of ATP products that can be produced for availability at one or more times. That is ATP data may include data specifying quantities of products with associated dates that the products are scheduled to be available for delivery to the customer. The dates or times at which the indicated quantity of an ATP product is available may be expressed in a variety of ways including time periods, time cycles, or any other suitable time scale.

As previously noted supply chain and manufacturing processes may be designed based on forecasted demand and therefore production data can reflect such anticipated or forecasted demand. In some embodiments, the production planning system 20 may utilize demand forecast model, a demand forecast from customers, and any previous orders (historical data) received from customers.

The system 10 may include an aggregation engine 30 that processes production data. In particular, the aggregation engine 30 may include an aggregation step or aggregation process by which various rules are applied to the production data in order to produce aggregated ATP data. The aggregation process may be used in summing up all ATP quantities for finished products which can be produced from the same or common materials e.g., raw material(s) or intermediate good(s) (that can be characterized by product individual resource consumption factors and multiplication factors. The latter may indicate the number of successor products that can be produced from one predecessor product) that run or processed through a same sequence of production routes or production stages (that can be characterized by the technology class of products that can be produced on it, its physical location, a constant ratio of number of products in and number of products out and a constant cycle time). In other words, the aggregation engine 30 may process production data or ATP data and determine one or more groups ATP products that share common or overlapping manufacturing sequences and materials and in which flexibilities of the supply chain and manufacturing processes can allow any one ATP product from a group ATP products to be produced instead of another one or more of ATP products from the same ATP group. The one or more quantities associated with each determined ATP product group can each indicate a maximum or total output that can be manufactured for any one ATP product from the ATP product group if the supply chain and manufacturing processes are adjusted.

For an ATP product group, an associated aggregated output quantity can be determined or calculated for over various times. The time can be expressed in various and any suitable formats, including for example product cycle times, time intervals, dates, etc. and the like.

The system 10 may also include an order promising engine 40 that processes customer orders. For example, the order promising engine 40 may receive or obtain customer order data requesting one or more ATP products. For a particular ATP product, the customer order data may include data specifying for a requested quantity amount of a particular ATP product for a requested deadline.

The order promising engine 40 may determine whether the requested order can be fulfilled by comparing the received customer order data to the production data. In order promising context, production data can be called ATP data. For each ATP product, the ATP data can indicate how much and when a product can be made available to a customer (e.g., ready for delivery to customer).

The order promising engine may also compare the customer order data to the aggregated ATP data in order to determine whether the customer order can be fulfilled. This may be done automatically or may be done if the order promising engine 40 determines that the customer order cannot be fulfilled based on the production data. That is the order promising engine 40 may access and use both the production data and the aggregated ATP data for determining whether fulfillment is possible. In this regard, the order promising engine 40 engine can use the type of data leading to the better (earlier and closer to the customer's requested date) promise date. For example, if the customer requests delivery in week 1 and order promising would determine a possible delivery date in week 3 based on production data and one in week 2 based on aggregated ATP data, the engine will promise week 2 and change the production schedule.

The order promising engine 40 may confirm fulfillment or non-fulfillment by sending an electronic notification (e.g., email, fax, text, etc.) to one or more computing devices associated with the customer order.

If a customer order is determined to be fulfilled based on aggregated ATP data, production facilities and processes with one or more production routes or stages may need to be adjusted to fulfill the demands of the customer order.

Therefore the order promising engine 40 may electronically send one or more notifications a production system 50. The production system 50 may include one more computers associated with controlling the supply chain and manufacture of an ATP Products. The notifications can indicate that or what kind of adjustments to the manufacturing processes to meet demands of customer orders.

Each of the production planning system 20, aggregation engine 30, the order promising engine 40, and production system 50 in the system of Fig. 1 may be separate entities operatively connected to each other. That is, each entity may include one or more computing devices (e.g., computer, server, tablet, mobile device, etc.). The computing devices or processors thereof may execute software stored on and/or accessed from any suitable non-volatile (e.g., non-transitory) computer readable storage media. While the production planning system 20, aggregation engine 30, etc. are depicted as separate entities, one or more of these components may be combined or implemented together on the same one or more computing devices, or separately. If implemented separately, these components may be directly connected to each other, or indirectly connected to each other through one or more intermediary networks (e.g., Internet, Intranets, etc.). Alternatively, the entities may reside or implemented as one or more software entities on one or more common or shared computing devices.

Each of the production planning system 20, aggregation engine 30, order promising engine 40, and production system 50 may also include or operatively connected to one or more databases, collectively represented as database 15. That is, while the database 15 is illustrated as a single component, this merely exemplary and not meant to be limitation. In some exemplary embodiments, the database 15 can include one or more database systems which may be located locally and/or remotely and operatively connected to the other components of the system 10. Any suitable database systems or formats may be used, wherein the various data/information may be subdivided and managed into one or more databases, tables, etc. as is appropriate in accordance with embodiments described herein. In this regard, the database 15 system may store, among other things, production data including ATP data, as well as aggregated ATP data.

As show in Fig. 1, the production planning system 20, aggregation engine 30, and the order promising engine 40 may be operatively connected to one or more customer computers associated with customers, collectively or individually designated by 70 (70a...70N).

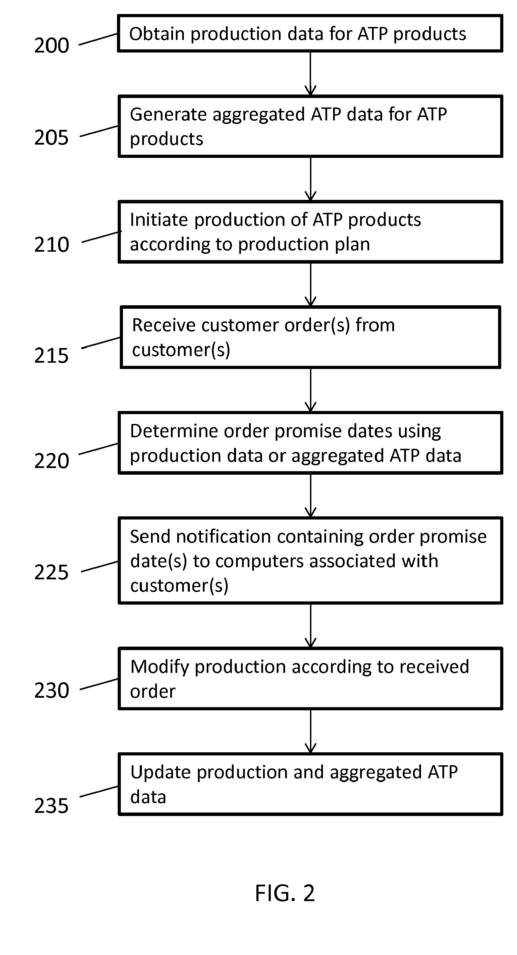

Fig. 2 shows a flow chart illustrating a method for managing ATP product data and managing supply chain and manufacturing processes according to an exemplary embodiment of the present disclosure. At step 200, one or more computers may obtain production data. The one or more computers may be associated with the one or more subsystems (production planning system 20, aggregation engine 30, and order processing engine 40 depicted in Fig. 1). The production data may be stored in the database 15. The database 15 may be configured as is depicted in Fig. 1B.

The production data or ATP data may indicate one or more availability times each with an associated finished product quantity for each of the plurality of ATP products. For example, as shown in Fig. 1B, the database 15 may include the availability data 15a and quantity data 15b. Additionally, the production data may include data indicating or specify the supply chain or production routes, production sequences, raw materials and intermediary products used or produced, as well as the production flexibilities thereof. Such information may be represented as production sequence 15c, materials 15d, production processes 15e, resource consumption factors 15f, multiplication factors 15g, production cycle times 15h, bill of material information 15i, flexibility data 15j, aggregated ATP data 15k, and misc data 15l.

The resource consumption factors 15f may indicate how much or what a rate resources are consumed by one or more machines or processes to produce a particular product. The production cycles times 15h may indicate how long each process takes or how long a machine takes to complete one or more tasks. The multiplication factors 15g may indicate the number of successor products that can be produced from one predecessor product. The flexibility data 15j, for example, may include information indicating whether or how a production process or sequence used in producing one ATP product may be used or adjusted to produce one or more other ATP products. For example, a production process may include the use of various machinery or equipment that has the flexibility or ability to be used to produce one or more different ATP products. Similarly one or more different ATP products may be produced using the same raw materials or same intermediate products. The misc data 15l may include any other needed or suitable data to realize the methods and systems described herein.

After obtaining production data, aggregated ATP data may be determined and generated at step 205. This may be done by the one or more computer of the system 10. Calculating or generating the aggregated ATP data may accomplished by aggregating or summing ATP quantities indicated from the production data using rules that consider flexibilities in the supply chain product structure and production routes for the ATP products. The calculation of the aggregated ATP data, or the aggregation process, may sum up all ATP quantities for finished products which can be produced from the same material (raw material or intermediate good, that can be characterized by product individual resource consumption factors and multiplication factors. The latter may indicate the number of successor products that can be produced from one predecessor product) running through the same sequence of production routes (characterized by the technology class of products that can be produced on it, its physical location, a constant ratio of number of products in and number of products out and a constant cycle time).

In an exemplary embodiment, using the production data or other suitable data, aggregation process may determine ATP product groups (each ATP product group including one or more ATP products) in which one of the ATP products may be produced instead of another one of the ATP products from the same because of commonalities (e.g., same production sequences, locations, materials, etc.). The aggregation process can determine an output quantity for each ATP group for one or more different times or within one or more time periods. That is, each of the final output quantities determined or calculated through the aggregation process indicates a potential maximum amount that any one of ATP products from the ATP product group can be produced at or within a given time period by adjusting the supply chain or manufacturing processes. Therefore aggregated ATP data can indicate potential output for adjustment to manufacturing that "aggregates" or concentrates manufacturing processes, machinery, materials, storage, etc. to produce more of one or more ATP products.

After generation and/or obtainment of production data manufacturing may begin. That is, at step 210 the production system may initiate production of the one or more ATP products according to the production data. The one or more computers may transmit an indication to one or more computers of the production system associated with manufacturing the one or more ATP products to begin production according to the production data. The indication may include the production data or parts thereof.

At step 215 customer orders may be received. In particular, the system 10 may electronically receive or obtain customer order data from a customer order. This may occur prior, concurrently, or after generation of aggregated ATP product data (e.g., quantities and time periods). The customer order data from a customer order may indicate a requested quantity and a deadline (e.g., a requested deadline or time period for the product to be available, such as available for delivery to the customer). The system 10 may then determine order promise dates for one or more of the ATP products for each of the ATP products indicated in the customer order at step 220. The system 10 may determine one or more order promise dates from the production data and/or the aggregated data. In this regard, the system 10 may determine order promise dates that match or fulfill the requirements of the customer order, if the customer order or parts thereof can be fulfilled.

After determining one or more order promising dates, at step 225, the order promise dates may be sent or forwarded to customer or to one or more computers associated with the customer order. For example, the system 10 may send the order promise dates as notification or order confirmation that the order will be fulfilled according to the requirements of the customer order. In one example, the system 10 may confirm fulfillment by electronically sending a notification to one or more computers associated order the customer order with the one or more determined order promise dates.

In step 230, the manufacturing processes may be updated so as to fulfill the customer order. In on example, the system 10 may transmit a message to one or more computers associated with manufacturing the one or more ATP products in the customer order. The message may indicate how to adjust or change the supply chain and the manufacturing processes so as to fulfill the customer order. The system 10 in return may receive a confirmation message in response confirming that the manufacturing processes have been updated.

After manufacturing processes have been updated or confirmed to be updated in accordance to meet the customer order, at step 235 the production and aggregated ATP data may be updated to reflect the new capabilities of the supply chain and manufacturing processes in response to committing to fulfilling the customer order.

The process in Fig. 2 may recursive or be repeated for future customer orders. Furthermore, new production data may be obtained for future time periods. That is the supply chain or manufacturing processes may be redesigned or modified based on a change to the projected demand in future times. Demand for one or more ATP products may be expected or projected to increase or decrease, or other products may be introduced or removed. In any event the system 10 may obtain such production data in response to changes to the supply chain or manufacturing processes.

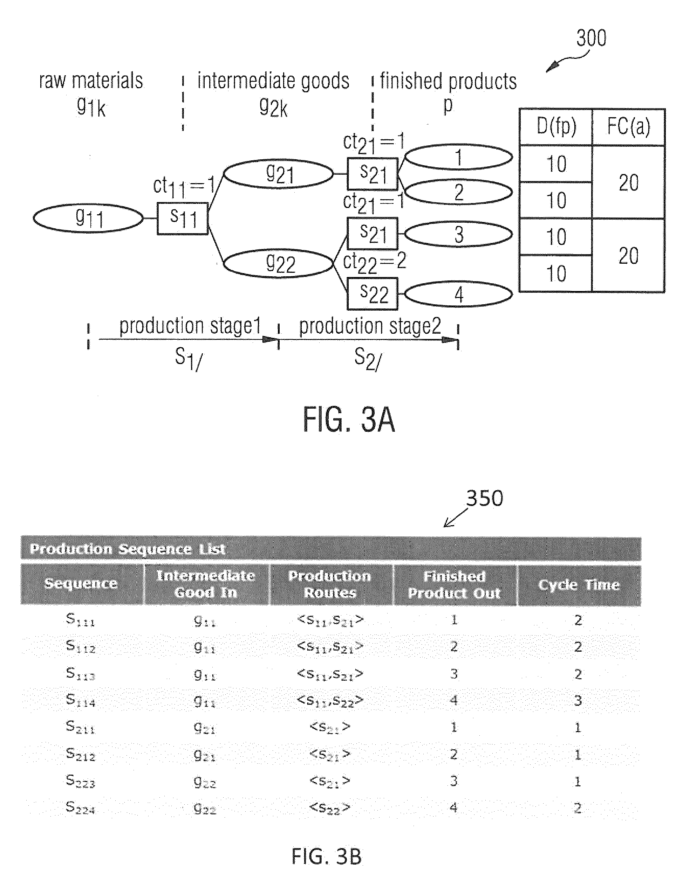

Figs. 3A and 3B show representations of a supply chain and manufacturing processing according to an exemplary embodiment. Fig. 3A shows is a schematic flow diagram 300 illustrating an exemplary supply chain and manufacturing processes for the manufacture of products p**1 p2, p3,** & **p4**. The products may be offered as ATP products, as explained herein. The information in the flow diagram Fig. 3A may be represented as information in the production data. Fig. 3A depicts a two stage production including the current cycle times for each production route provided by production planning, a constant demand forecast, *FC(a),* of 20 pieces for finished products 1 and 2 and 20 pieces for finished products 3 and 4, which was disaggregated into a demand mix *D(fp),* for production planning of 10 pieces for each finished product. No capacity limitations may be assumed, but the methods and systems herein may equally apply to or work in capacity constrained environments.

In the example of Fig. 3A, the finished products (**p1, p2, p3, p4**) are manufactured through from the same raw material $g_{11}$ and each undergoes a two-stage production process. The intermediate good $g_{21}$ is produced and/or is used to produce products **p1** & **p2,** while intermediate good $g_{22}$ is produced and/or is used to produce products **p3,** & **p4**. While ATP products **p1**, **p2, p3,** & **p4** all are processed through production route $s_{11}$ products **p1**, **p2,** & **p3** are further processed through production route $s_{21}$ while product **p4** is processed through production route $s_{22}$. Each production route for an ATP product may have an associated production or cycle time. For example, the production route $s_{11}$ has a cycle time $ct_{11}$ of 1 while the production route $s_{22}$ has a cycle time $ct_{22}$ of 2. Therefore, the ATP quantities for the finished product **p1**, **p2,** & **p3** can be aggregated for time buckets greater than the cycle time of the total cycle time of the sequence of the production routes $s_{11}$ and $s_{21}$. Accordingly, the finished **p1** and **p2** can be cumulated for time buckets greater than the cycle time of production route $s_{21}$.

Fig. 3B shows a table 350 representing exemplary production sequences of the production representing in Fig. 3A. For example, a production sequences may include all productions stages, e.g., all productions events or set of processes starting from procurement of raw materials until the completion of a final product. For example, in Fig. 3B production sequences $S_{111}$, $S_{112}$, $S_{113}$, & $S_{114}$ start with the procurement of raw materials $(g_{11})$ and end when with product completion. Other production sequences can begin at other points or production stages, such as and begin at production stages after the beginning. Therefore also listed in the table of Fig. 3B are production sequences $S_{211}$, $S_{212}$, $S_{213}$, & $S_{214}$ which start after production has begun with the obtainment or production of intermediate goods (e.g., $g_{21}$ and $g_{22}$).

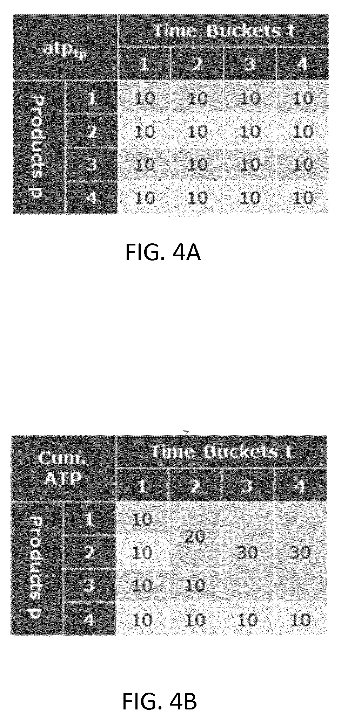

Fig. 4A, shows, according to an exemplary embodiment of a table 400 indicating the ATP product output quantities for products **p1**, **p2**, **p3**, **p4** of the supply chain or manufacturing process depicted in Figs. 3A & 3B. The quantities are listed for each of the products over four time periods or "time buckets". This information can be included in the production data. An aggregation process, as previously explained, can be applied to the production data to determine aggregated quantities, which are represented in table 450 of Fig. 4B. Because aggregation is not possible in the first time period, there are no aggregated quantities as products almost finished or too close to completion such for the manufacturing processes to be adjusted to produce another or different finished product.

However, in the second time bucket, an aggregated quantity is given for products **p1** & **p2**. Thus table 450 shows that a potential quantity of 20 units of one of products p**1** and **p2** can be produced within two (2) time buckets. Similarly, in three (3) and four (4) time periods or time buckets, a potential thirty (30) units of one of products **p1**, **p2,** and **p3** can be made and available to customer(s) due adjustment of manufacturing processes.

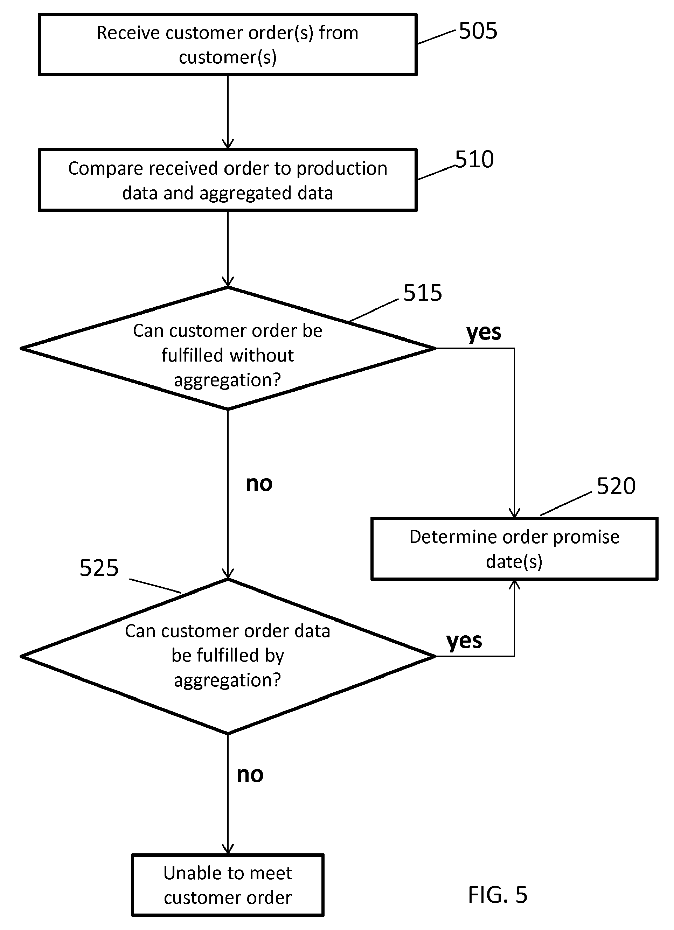

Fig. 5, shows according to an exemplary embodiment, a method for fulfilling customer orders. The method in Fig. 5 may be implemented by the system 10, as depicted in Fig. 2 or any other suitable system. At step 505, a customer order, or the data thereof may be received by one or more computers. After receiving, the customer order, the one or more computers may obtain or access production data and aggregated data, or portions thereof. In particular, the one or more computers may access data indicating data indicating quantity and availability time data, such as depicted in Fig. 4A for ATP products produced through the supply chain and manufacturing processes of Fig. 3A. As mentioned the production data may be a result of previously production planning that can be done on a product level and based on forecasts.

As previously discussed, the customer order data may indicate a quantity and availability date for each one or more ATP products. At step 510, the one or more computers, may compare this information to the relevant production data and aggregated data. For example, at step 515, the requested customer order data may be compared by the one or more computers to the production data to determine whether the supply chain and manufacturing process can fulfilled without aggregation. If yes, then at step 520, the order promise dates can be determined for order confirmation. If not, then at step 525, the customer order data may be compared by the one or computers to the aggregated ATP data. If yes, then the method proceeds to step 520 to determine order promise dates. If not, then then the customer order cannot be met. The process of obtaining customer orders and/or providing order confirmation may be executed in real-time.

It can be appreciated that order promise dates may be generated to partially fill a customer order. That is aggregated ATP data may still be used even if a customer order cannot be completely filled, since it can give "better" results in terms of quantity or deadline preferences. And therefore supply chain and manufacturing processes may still be "aggregated" or adjusted even if a customer order cannot meet customer order specifications.

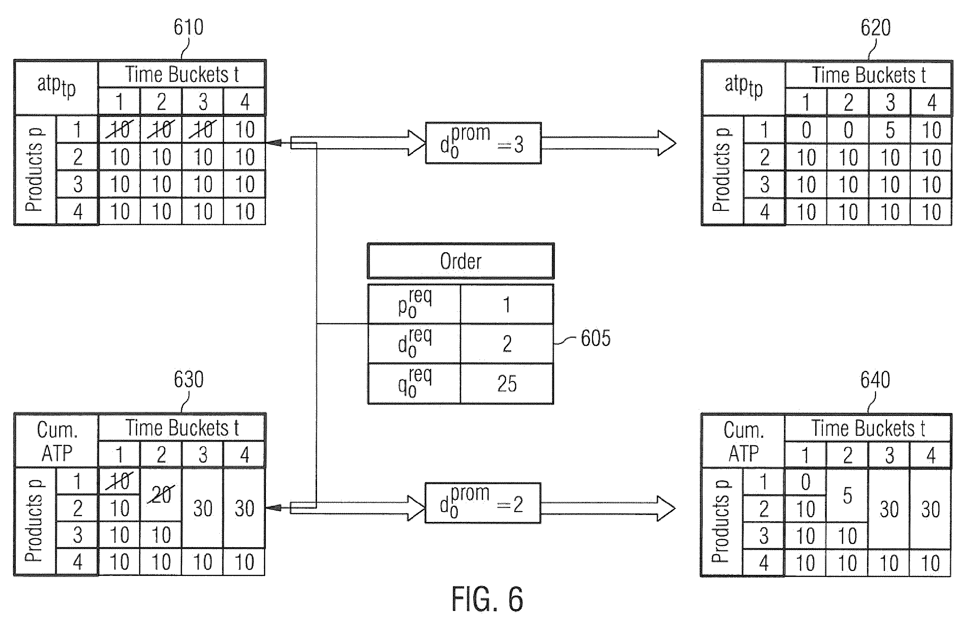

Fig. 6 shows an example of comparing customer order data to both ATP data and aggregated ATP data. The example of Fig. 6 assumes the supply chain and manufacturing process of Fig. 3A that produces products **p1**, **p2, p3** and **p4.** Shown in Fig. 6 is a representation of customer order data 605 that includes a requested product, $p_0^{req}$, a requested date or time $d_0^{req}$, and a requested quantity $q_0^{req}$. In this case, the customer order data 605 indicates a request for product p**1** in two (2) time cycles/periods and a quantity request of twenty-five (25) units.

In table 610 of Fig. 6, a marked up version of Fig. 4A, the slashes indicate a minimum of three time buckets or periods are necessary according to the ATP production data for the supply chain and manufacturing processes to produce 25 units of product p1. Therefore in this case, the order promise data or time $d_0^{prom}$ is three (3) time cycles/buckets from the present. Therefore if such an order were acceptable, table 620 shows the ATP data after committing to the customer's order, e.g., producing 25 units of product 1 in three time periods.

In table 630 of Fig. 6, which is a marked up version of Fig. 4B, the slashes indicate a minimum of two time buckets or periods shows are necessary according to the aggregated ATP data for the supply chain and manufacturing processes to produce 25 units of product p1. That is table 630 shows that the supply chain and manufacturing processes have the capability and flexibility to produce 25 units of product p1 in two time periods. Table 640 in Fig. 6 shows the remaining aggregated capabilities after committing to such a customer order.

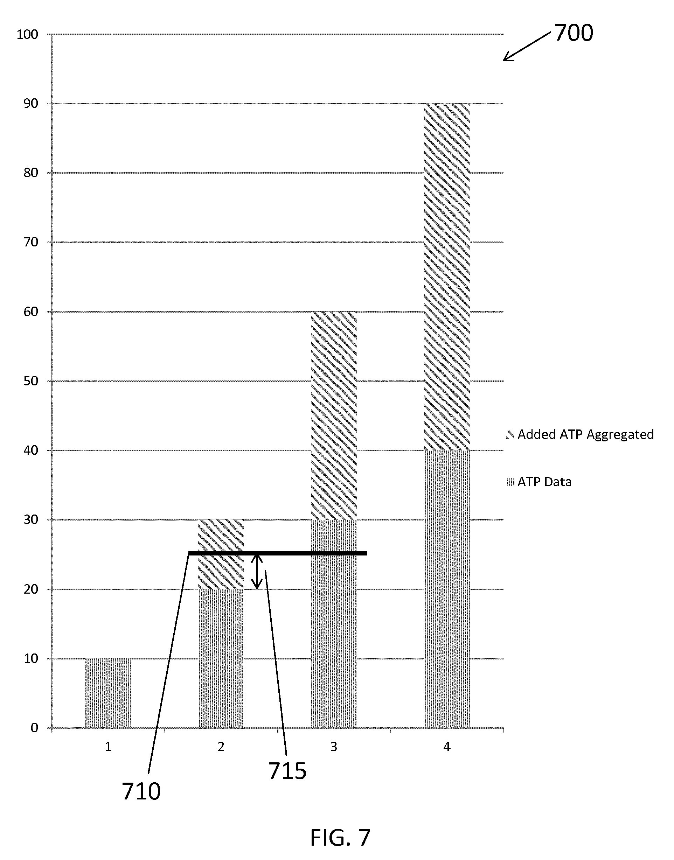

The flexibility or potential output capability can also be shown in a variety of different ways. For example, Fig. 7 includes a chart 700 that shows running cumulative output for product **p1** produced by without adjustment and with adjustment ("aggregation") to the supply chain and manufacturing process of Fig. 2. The chart 700 shows the how much aggregation to the supply chain and manufacturing can potentially increase the output of for product p1. The horizontal line 710 indicates a desired customer demand for a quantity of 25 of product **p1.**

In regular manufacturing, e.g., without adjustment or aggregation of the supply chain and manufacturing processes capabilities, only a total of 20 units of product 1 can be produced within two time periods. Therefore, for a customer order requesting 20 units of product **p1** within two time periods, there would be a deficiency or discrepancy 715 of 5 units of product **p1.** However, if an aggregation or adjustment aggregation process is applied to the supply chain and manufacturing processes, Fig. 7 shows that the potential output that can be added through such adjustment can meet or exceed the additional 5 units within the two time periods. In short, the non-adjusted or ATP data shows that three time periods are required to enough quantity of product p1 to meet customer demand, which in this case is 25 units of p1. However, with aggregation, only two time periods are necessary.

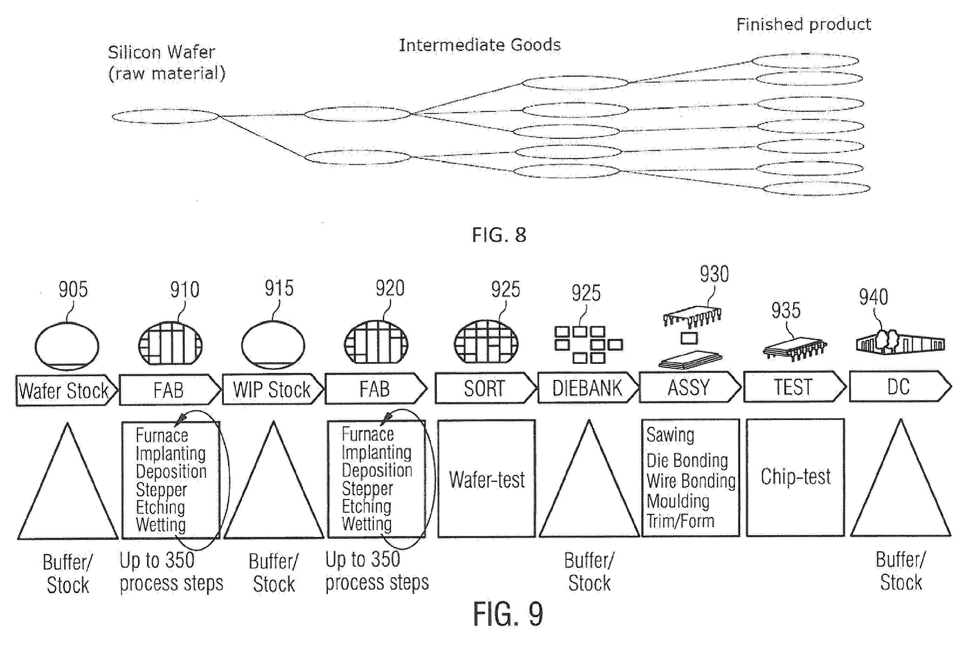

The adjustment or aggregation process may be applied to one or more supply chain and manufacturing processes. In general supply chain and manufacturing process may be represented in data format (e.g., ATP data) or modeled as a graph such as a decision tree, in which branches represent outcomes and nodes represent a decision, such as a possible product route that may be undertaken to produce an ATP product. In particular, such a process may be applied to make products such as electronic devise, or semiconductor devices. Fig. 8 shows a generic representation of a decision tree representation of a supply chain and manufacturing process that produces a plurality of semiconductor devices. As shown in Fig. 8, the ATP products (e.g., semiconductor devices) may be produced from the same raw materials, which in this example may be silicon wafer. As shown, multiple branches extend from the common first event (silicon wafer material), each representing a different processes or event that occurs to the silicon wafer. As shown in Fig. 8, different intermediate goods and different manufacturing steps may occur to produce a plurality of different ATP products.

Fig. 9, shows according to one example of a supply chain and manufacturing process that may be applied to produce semiconductor devices. As shown, at step 905, a first event may be a wafer stock step, which may include procuring or obtaining a suitable stock of a semiconductor material or wafers. At step 910, a fabrication step may be implemented. The fabrication step may include a plurality of manufacturing sub-steps or sub-processes that may include, without limitation, a baking/furnace process, implantation step, deposition step, stepper processing step, etching step, wetting step, etc. These steps may each implemented one or a plurality of times. The order or sequence of these steps may depend on the final ATP product to be produced. For instance one or more ATP products may share some or at least some of the same production steps, produced by the same equipment, implemented in the same sequence order, and/or implemented at the same physical locations. As a result a set of different intermediate goods may be produced.

After the fabrication step 910, another stocking or procurement step may occur at step 915. For example, the step may be the accumulation of a suitable amount of intermediate goods needed in subsequent fabrication steps or manufacturing processes. After the stocking step 915, another fabrication step 920 may then occur using the intermediate goods produced and/or procured. In the example of semiconductor, any suitable semiconductor processes may be implemented including those previously mentioned herein.

After fabrication step, at 925, the latest intermediate goods or a part thereof (e.g., wafer) may be tested and then sorted. That is this step may filter out "good" wafers/intermediate goods from "bad" wafers/goods that have failed one or more tests. After sorting step 925, there may be another stocking step 930, so to stock or accumulate before the products are sent out for an assembly step, at 930. In the case of semiconductor device, an assembly step may include on or more assembly substeps including, for example, die bonding, wire bonding, molding, trimming and forming, etc.

After assembly, the various devices may be finally tested, at step 935. The testing step may be done at one or more different locations. Additionally, at step 940, the good devices (devices passing testing) may be stocked or stored at one or more storage facilities and made available for delivery to customers.

Each of the exemplary steps may be associated with a time. This may be expressed in various ways, e.g., days, weeks, hours, or time cycles (where a time cycle unit can also be days, weeks, months, etc.) This information may be contained in the production data described herein.

Until now, ATP data used for online order promising either does not contain information about supply chain and production flexibilities at all or generic products are used in production planning to represent flexibilities in between products of a certain product family. The latter are separate planning objects with its own planning data and were shown to lead to inaccurate supply information, because ATP shows either too much or too little supply.

In both cases (no representation of flexibilities / usage of generic products) the given order confirmations in online order promising do not reflect the supply chain flexibilities accurately. Hence, an incoming order can get an inaccurate real time delivery confirmation date. In most cases, this confirmation date will be worse (later) than the best technically feasible promise date. When generic products are used for supply generation, the confirmed delivery date can also be too early. In any case, the inaccurate confirmation date leads to wrong commitments to the customer, which can lead to lost sales and high manual effort. If orders are regularly replanned, the inaccurate delivery date will be updated after the next production planning run. If no replanning is employed, the inaccurate delivery date will lead to high inventory cost (for the case of late confirmations) and/or bad delivery performance (delivery earlier or later than confirmed) and therefore, low customer satisfaction and retention.

Inaccuracies in delivery date confirmations appear, if the incoming order's quantity together with the quantities of already existing orders exceeds the demand forecast on finished product/ATP product level that are used to generate the preliminary production plan that is used for real time order promising.

In summary, the disadvantages of this solution are: (1) lost sales due to bad online order confirmations. (2) Updates of order confirmations towards the customers that make it necessary for the customer to replan their own production again. (3) Inaccurate online order confirmations. (4) Additional effort for maintenance of the generic products. (5) High inventory cost. (6) Low customer satisfaction.

According to exemplary embodiments, in the present disclosure, supply chain and production flexibilities are presented in ATP data or information by aggregating finished product ATP that was generated on basis of demand forecasts. The aggregation is done for products that use the same supply chain and production resources (capacities and materials) and have similar production cycle times. It is designed for production environments that show typical characteristics of a divergent material flow production process (1 raw material/intermediate good can be processed to N intermediate goods/finished products).

By aggregating back from the most detailed product level (finished product) any kind of aggregation is possible. Thus, flexibilities can be represented where actually present. The representation is therefore more accurate. Furthermore, it is possible to vary the aggregation level over time and use different aggregation levels for different products. For example it is possible to show no flexibilities in tight supply situations, whereas the flexibility represented in ATP is very high, in times of high idle capacity.

At any aggregated level the invention ensures a 100% feasible plan for the aggregated ATP, since it uses full planning, material and capacity information on the most detailed level available.

Advantages are: (1) No lost sales due to wrong or inaccurate online order promises. (2) No updates of order confirmations towards the customer due to non-representation of supply chain and production flexibilities in ATP information and therefore no replanning activities on the customer's side. (3) Accurate online order promises, less re-planning activities in the company due to bad online order confirmations. (4) No need to model generic products. (5) Minimal inventory cost achievable by means of order management. (6) High customer satisfaction.

In accordance with exemplary embodiments, uncertain customer order lead times can be taken into account to eliminate the negative effects of forecast uncertainty on the robustness and accuracy of online order promises making use of risk pooling effects. ATP quantities can be aggregated using rules that consider flexibilities in the supply chain's product structures and production routes. To represent production route and product structure flexibilities in the ATP information an ATP aggregation step may be inserted in the planning process after supply chain planning (e.g., demand supply matching or master production planning). The calculation of the aggregated ATP information may be performed by the aggregation process on basis of finished product ATP provided by supply chain planning. The ATP aggregation process may sum up all ATP quantities for finished products which can be produced from the same material (raw material or intermediate good, that can be characterized by product individual resource consumption factors and multiplication factors. The latter may indicate the number of successor products that can be produced from one predecessor product) by running through the same sequence of production routes (characterized by the technology class of products that can be produced on it, its physical location, a constant ratio of number of products in and number of products out and a constant cycle time).

According to at least one exemplary embodiment, for an aggregation of products, the sequence's total cycle time must be smaller than the difference between the current date and the planned finishing time of the products in order to guarantee that the flexibility to produce all finished products contained in the aggregation still exists and the materials have not been processed further already to finish the production of one specific finished product. Furthermore, the aggregated ATP quantities may always be built on the highest possible aggregation level considering the production route sequences' cycle times and the remaining production time.

While various aspects of this disclosure have been particularly shown and described with reference to specific embodiments, it should be understood by those skilled in the art that various changes in form and detail may be made therein without departing from the spirit and scope of the disclosure as defined by the appended claims. The scope of the disclosure is thus indicated by the appended claims and all changes which come within the meaning and range of equivalency of the claims are therefore intended to be embraced.

**Claims**

1. A method comprising:

   obtaining, by the one or more computers, production data for a plurality of ATP products, the production data comprising data indicating one or more availability times and an associated finished output product quantity at each of the one or more availability times for each of the plurality of ATP products, wherein the availability times and associated quantity are based on projection data;

   generating, by the one or more computers, aggregated ATP data, the aggregated ATP data comprising data indicating for each of one or more time periods:

   one or more ATP product groups, each ATP product group comprising a subset of the plurality of ATP products, and

a quantity associated with each of the ATP product groups, the quantity indicating a maximum amount of finished products that can be produced from a selected one of ATP products from the ATP product group;

transmitting, by one or more computers, an indication to begin production according to the production data to one or more computers associated with manufacture of the plurality of Available-to-Promise (ATP) products;
receiving, at the one or more computers, a customer order data indicating one or more products of the ATP products requested;
generating, by the one or more computers, data indicating an order promise date respectively for each of the one or more products of the received customer order data, the order date based on the production data and the aggregated ATP data;
transmitting, by the one or more computers, the data indicating the generated order promise date to one or more computers associated with the received customer order data;
transmitting, by the one or more computers, to the one or more computers associated with production of the plurality of ATP products, data indicating a modification to production based on the received customer order data, and the production data or aggregated ATP data ; and
updating, by the one or more computer the aggregated ATP data based on the received customer order data.

2. The method of claim 1, wherein the production data further comprises data indicating one or more production resources used for each ATP product, capacity information for each production resource, capacity consumption factors of each ATP product on each resource, one or more production routes and a time associated with each of the production routes for each respective ATP product, intermediate and raw materials, one or more machines used for each of the ATP products, amount of capacity one unit of each ATP product consumes on each of the one machine or more machines, multiplication factors of each ATP product on each machine indicting an amount of successor products can be produced out of one intermediate product on a specific machine, one or more lead times of each ATP product on each machine indicating an amount of time each ATP product uses a machine take, a work in progress for each ATP product, and intermediate and raw materials.

3. The method of claim 1 or 2, wherein each of the ATP product groups of the aggregated ATP data comprises a plurality of ATP products that can be produced from a same material processed through a same sequence of one or more production routes.

4. The method of any one of claims 1 to 3, wherein the customer order comprises data indicating a requested ATP product quantity and a requested deadline each of the one or more ATP products in the customer order.

5. The method of any one of claims 1 to 4, wherein the order promise dates are determined from the aggregated ATP data for a respective ATP product when the requested quantity and/or deadline exceeds the respective quantity or deadline capability indicated in the production data.

6. The method of claim 5, wherein each ATP product in which the order promise date is determined from the aggregated ATP data belongs to an ATP product group that has a remaining production time less than a difference between a current date and the respective deadline of the customer order for an amount of finished products that is equal to or greater than the quantity in the customer order.

7. The method of any one of claims 2 to 6, wherein the production route data further comprises data indicating one or more fabrication processes.

8. The method of claim 7, wherein data indicating one or more fabrication processes comprises data indicates one or more stocking processes, one or more sorting processes, one or more assembly processes, and one or more testing processes.

9. The method of any one of claims 1 to 8, wherein the projection data comprises data based at least one of a demand forecast model, a demand forecast from customers, and previous orders received from customers.

10. A system comprising:

one or more electronic databases stored on one or more non-transitory computer-readable storage media, the databases comprising production data including information for a plurality of available-to-promise (ATP) products, comprising, for one each of the ATP products, at least availability time and output quantity for each availability time;
an aggregation system comprising:

one or more processors,
a non-transitory computer-readable storage medium comprising instructions and operatively coupled to the one or more processors, the instructions which when executed by the one or more processors, cause the processors to:

retrieve, from the one or more databases, at least a portion of the production data;
generating, by the one or more processors, aggregated ATP data, the aggregated ATP data comprising data indicating for each of one or more time periods:

one or more ATP product groups, each ATP product group comprising a subset of the plurality of ATP products, and
a quantity associated with each of the ATP product groups, the quantity indicating a maximum amount of finished products that can be produced from a selected one of ATP products from the ATP product group; and
storing the aggregated ATP data in the one or more electronic databases.

11. The system of claim 10, further comprising:

an order promising system comprising:

one or more processors,
a non-transitory computer-readable storage medium comprising instructions and operatively coupled to the one or more processors, the instructions, when executed by the one or more processors, cause the processors to:

accessing, by the one or more computers, the production data and the aggregated ATP data;
receiving, at the one or more computers, a customer order data indicating one or more products of the ATP products requested;
generating, by the one or more computers, data indicating at least one order promise date respectively for each of the one or more products of the received customer order data, the at least one order date based on the production data or the aggregated ATP data; and
transmitting electronically, by the one or more processors, an order confirmation including the one or more order promise dates to one or more computers associated with the received customer order data.

12. The system of claim 11, wherein the instructions further cause the processors to update, the production data and the aggregated ATP data based on the received customer order data and the order confirmation.

13. The system of claim 11 or 12, wherein the instructions further cause the one or more processors to electronically transmit data indicating a modification to supply chain based on the received customer order data to one or more computers controlling a supply chain of the ATP products.

14. The system of any one of claims 10 to 13, wherein the production data further comprises information indicating one or more production resources used for each ATP product, capacity information for each production resource, capacity consumption factors of each ATP product on each resource, one or more production routes and a time associated with each of the production routes for each respective ATP product, intermediate and raw materials, one or more machines used for each of the ATP products, amount of capacity one unit of each ATP product consumes on each of the one machine or more machines, multiplication factors of each ATP product on each machine indicting an amount of successor products can be produced out of one intermediate product on a specific machine, one or more lead times of each ATP product on each machine indicating an amount of time each ATP product uses a machine take, a work in progress for each ATP product, and intermediate and raw materials.

FIG. 1A

15

| | |
|---|---|
| Availability Time(s) 15a | Multiplication Factors 15g |
| Quantity   15b | Production Cycle Times 15h |
| Production Sequence 15c | Bill of Material Information 15i |
| Materials   15d | Flexibility Data 15j |
| Production Processes   15e | Aggregated ATP Data 15k |
| Resource Consumption Factors 15f | Misc. 15l |

FIG. 1B

200 — Obtain production data for ATP products

205 — Generate aggregated ATP data for ATP products

210 — Initiate production of ATP products according to production plan

215 — Receive customer order(s) from customer(s)

220 — Determine order promise dates using production data or aggregated ATP data

225 — Send notification containing order promise date(s) to computers associated with customer(s)

230 — Modify production according to received order

235 — Update production and aggregated ATP data

FIG. 2

FIG. 3A

| Production Sequence List | | | | |
|---|---|---|---|---|
| Sequence | Intermediate Good In | Production Routes | Finished Product Out | Cycle Time |
| $S_{111}$ | $g_{11}$ | $<s_{11},s_{21}>$ | 1 | 2 |
| $S_{112}$ | $g_{11}$ | $<s_{11},s_{21}>$ | 2 | 2 |
| $S_{113}$ | $g_{11}$ | $<s_{11},s_{21}>$ | 3 | 2 |
| $S_{114}$ | $g_{11}$ | $<s_{11},s_{22}>$ | 4 | 3 |
| $S_{211}$ | $g_{21}$ | $<s_{21}>$ | 1 | 1 |
| $S_{212}$ | $g_{21}$ | $<s_{21}>$ | 2 | 1 |
| $S_{223}$ | $g_{22}$ | $<s_{21}>$ | 3 | 1 |
| $S_{224}$ | $g_{22}$ | $<s_{22}>$ | 4 | 2 |

FIG. 3B

| atp$_{tp}$ | | Time Buckets t | | | |
|---|---|---|---|---|---|
| | | 1 | 2 | 3 | 4 |
| Products p | 1 | 10 | 10 | 10 | 10 |
| | 2 | 10 | 10 | 10 | 10 |
| | 3 | 10 | 10 | 10 | 10 |
| | 4 | 10 | 10 | 10 | 10 |

FIG. 4A

| Cum. ATP | | Time Buckets t | | | |
|---|---|---|---|---|---|
| | | 1 | 2 | 3 | 4 |
| Products p | 1 | 10 | 20 | | |
| | 2 | 10 | | 30 | 30 |
| | 3 | 10 | 10 | | |
| | 4 | 10 | 10 | 10 | 10 |

FIG. 4B

FIG. 5

FIG. 6

620

Table 610 (atp_tp):

| Products p / atp_tp | Time Buckets t | | | |
|---|---|---|---|---|
| | 1 | 2 | 3 | 4 |
| 1 | 0 | 0 | 5 | 10 |
| 2 | 10 | 10 | 10 | 10 |
| 3 | 10 | 10 | 10 | 10 |
| 4 | 10 | 10 | 10 | 10 |

610

| Products p / atp_tp | Time Buckets t | | | |
|---|---|---|---|---|
| | 1 | 2 | 3 | 4 |
| 1 | 10 | 10 | 10 | 10 |
| 2 | 10 | 10 | 10 | 10 |
| 3 | 10 | 10 | 10 | 10 |
| 4 | 10 | 10 | 10 | 10 |

640

| Products p / Cum. ATP | Time Buckets t | | | |
|---|---|---|---|---|
| | 1 | 2 | 3 | 4 |
| 1 | 0 | 5 | 30 | 30 |
| 2 | 10 | 10 | | |
| 3 | 10 | 10 | 10 | 10 |
| 4 | 10 | 10 | 10 | 10 |

630

| Products p / Cum. ATP | Time Buckets t | | | |
|---|---|---|---|---|
| | 1 | 2 | 3 | 4 |
| 1 | 10 | 20 | 30 | 30 |
| 2 | 10 | 10 | | |
| 3 | 10 | 10 | 10 | 10 |
| 4 | 10 | 10 | 10 | 10 |

Order (605):

| | |
|---|---|
| $p_0^{req}$ | 1 |
| $d_0^{req}$ | 2 |
| $q_0^{req}$ | 25 |

$d_0^{prom} = 3$

$d_0^{prom} = 2$

FIG. 7

21

Silicon Wafer
(raw material)

Intermediate Goods

Finished product

**FIG. 8**

905 — Wafer Stock
910 — FAB
915 — WIP Stock
920 — FAB
925 — SORT
925 — DIEBANK
930 — ASSY
935 — TEST
940 — DC

Buffer/Stock

Furnace
Implanting
Deposition
Stepper
Etching
Wetting

Up to 350 process steps

Buffer/Stock

Furnace
Implanting
Deposition
Stepper
Etching
Wetting

Up to 350 process steps

Wafer-test

Buffer/Stock

Sawing
Die Bonding
Wire Bonding
Moulding
Trim/Form

Chip-test

Buffer/Stock

**FIG. 9**

**Europäisches Patentamt**

**European Patent Office**

**Office européen des brevets**

# EUROPEAN SEARCH REPORT

Application Number

EP 15 19 3125

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 97/00489 A1 (I2 TECHNOLOGIES INC [US]) 3 January 1997 (1997-01-03) * abstract * * page 2, line 3 - page 8, line 20 * * page 10, line 3 - page 18, line 12 * ----- | 1-14 | INV. G06Q10/06 G06Q10/08 |
| X | US 2004/010442 A1 (MERKER STEFAN [DE] ET AL) 15 January 2004 (2004-01-15) * abstract * * paragraph [0001] - paragraph [0049] * * claims 1-33 * ----- | 1-14 | |
| A | US 2013/085797 A1 (LAUR FABRICE [DE]) 4 April 2013 (2013-04-04) * the whole document * ----- | 1-14 | |

TECHNICAL FIELDS SEARCHED (IPC)

G06Q

The present search report has been drawn up for all claims

| Place of search | Date of completion of the search | Examiner |
|---|---|---|
| The Hague | 17 March 2016 | Peelen, Bastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 19 3125

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2016

| Patent document cited in search report | | | Publication date | Patent family member(s) | | | Publication date |
|---|---|---|---|---|---|---|---|
| WO 9700489 | A1 | | 03-01-1997 | AT | 175045 | T | 15-01-1999 |
| | | | | AU | 710420 | B2 | 23-09-1999 |
| | | | | AU | 5599096 | A | 02-01-1997 |
| | | | | BR | 9608946 | A | 02-03-1999 |
| | | | | CA | 2176530 | A1 | 17-12-1996 |
| | | | | DE | 69601208 | D1 | 04-02-1999 |
| | | | | DE | 69601208 | T2 | 20-05-1999 |
| | | | | DK | 0776509 | T3 | 23-08-1999 |
| | | | | EP | 0776509 | A1 | 04-06-1997 |
| | | | | ES | 2128177 | T3 | 01-05-1999 |
| | | | | GB | 2302427 | A | 15-01-1997 |
| | | | | JP | H096862 | A | 10-01-1997 |
| | | | | US | 6167380 | A | 26-12-2000 |
| | | | | US | 6188989 | B1 | 13-02-2001 |
| | | | | US | 8423395 | B1 | 16-04-2013 |
| | | | | WO | 9700489 | A1 | 03-01-1997 |
| US 2004010442 | A1 | | 15-01-2004 | NONE | | | |
| US 2013085797 | A1 | | 04-04-2013 | NONE | | | |

EPO FORM P0459

For more details about this annex : see Official Journal of the European Patent Office, No. 12/82